# EUROPÄISCHE PATENTSCHRIFT

(11) **EP 0 959 240 B1**
(45) Veröffentlichungstag und Bekanntmachung des Hinweises auf die Patenterteilung: **24.09.2003**
(21) Anmeldenummer: 98810478.2
(22) Anmeldetag: 22.05.1998
(51) Int. Cl.: F02F 1/24, F02F 1/38, F02M 61/14, F02M 61/18

(54) **Zylinderdeckel für eine Zweitakt-Dieselbrennkraftmaschine und einen solchen enthaltende Anordnung**
Cylinder head and arrangement for a two-stroke diesel engine
Culasse et agencement pour un moteur diesel à deux-temps

(43) Veröffentlichungstag der Anmeldung: 24.11.1999
(73) Patentinhaber: Wärtsilä Schweiz AG, 8401 Winterthur (CH)
(72) Erfinder: Ruch, Henri, 8553 Mettendorf (CH)
(74) Vertreter: Sulzer Management AG

(56) Entgegenhaltungen:
- EP-A- 0 299 385
- EP-A- 0 829 636
- DE-A- 3 149 033
- FR-A- 1 479 937
- US-A- 5 353 992

## Beschreibung

Die Erfindung betrifft einen Zylinderdeckel für eine Zweitakt-Dieselbrennkraftmaschine mit Längsspülung, insbesondere für einen Grossdieselmotor, sowie eine Anordnung mit einem solchen Zylinderdeckel gemäss dem Oberbegriff des jeweiligen unabhängigen Patentanspruchs.

Ein derartiger Zylinderdeckel wird im Dokument EP 0 829 636 A1 angezeigt.

Zweitakt-Dieselbrennkraftmaschinen mit Längsspülung werden insbesondere in Ausführungen als Grossdieselmotoren häufig als Antriebsaggregate für Schiffe verwendet. Bei solchen bekannten längsgespülten Dieselmotoren tritt die Luft typischerweise durch Spülschlitze, die im unteren Bereich des Zylinders angeordnet sind, in den Zylinder ein. Im zentralen Bereich des Zylinderdeckels, das heisst der Kolbenstirnfläche gegenüberliegend, ist ein Auslassventil achsparallel zur Längsachse des Zylinders angeordnet, durch welches die Spülluft bzw. die Verbrennungsgase aus dem Zylinder austreten können. Die Einspritzdüsen für den Brennstoff sind in den seitlichen, schräg zur Längsachse des Zylinders verlaufenden Bereichen des Zylinderdeckels angeordnet, sodass die Brennstoffeinspritzung in den Brennraum typischerweise von der Seite erfolgt. Um dennoch eine möglichst gleichmässige Verteilung des Brennstoffs im Brennraum und einen möglichst effizienten Verbrennungsvorgang zu erreichen, ist es notwendig, für jeden Zylinder mehrere Einspritzdüsen, beispielsweise jeweils vier pro Zylinder, vorzusehen, von denen jede mittels einer Einspritzvorrichtung mit Brennstoff versorgt und zum richtigen Zeitpunkt angesteuert werden muss.

Auch wenn sich dieses Konzept in der Praxis bewährt hat, so ist es doch relativ aufwendig und auch kostenintensiv.

Es ist daher eine Aufgabe der Erfindung, einen anderen Zylinderdeckel für eine Zweitakt-Dieselbrennkraftmaschine mit Längsspülung, insbesondere einen Grossdieselmotor, vorzuschlagen, der einen einfacherer Ausgestaltung des Motors ermöglicht, ohne dass dafür Zugeständnisse an seine Leistungsfähigkeit und Effizienz vonnöten sind. Ferner ist es eine Aufgabe der Erfindung, eine entsprechende Anordnung aus Zylinderdeckel, Einspritzdüse und Auslassventil vorzuschlagen.

Der diese Aufgabe lösende Zylinderdeckel für eine Zweitakt-Dieselbrennkraftmaschine mit Längsspülung bzw. die entsprechende Anordnung sind durch die Merkmale des jeweiligen unabhängigen Anspruchs gekennzeichnet.

Erfindungsgemäss wird also ein Zylinderdeckel für eine Zweitakt-Dieselbrennkraftmaschine mit Längsspülung, insbesondere für einen Grossdieselmotor, die mindestens einem Zylinder aufweist, in dem ein Kolben hin- und herbewegbar angeordnet ist, vorgeschlagen, welcher Zylinderdeckel eine Deckenfläche und eine Seitenfläche umfasst, die im montierten Zustand den Brennraum des Zylinders begrenzen, sowie eine Einbauöffnung zur Aufnahme einer Einspritzdüse, durch die der Brennstoff in den Brennraum einbringbar ist, und eine Auslassöffnung für ein Auslassventil zum Abführen der Verbrennungsgase aus dem Brennraum, wobei die Einbauöffnung in der Deckenfläche vorgesehen ist.

Dadurch, dass die Einbauöffnung für die Einspritzdüse in der Deckenfläche des Zylinderdeckels angeordnet ist, also im montierten Zustand in der der Kolbenstirnfläche gegenüberliegenden Begrenzungsfläche des Brennraums, wird eine zentrale oder im wesentlichen zentrale Einspritzung des Brennstoffs in den Brennraum ermöglicht. Durch diese Massnahme lässt sich eine sehr gute Verteilung des Brennstoffs im Brennraum mit nur einer Einspritzdüse pro Zylinder erreichen. Dies bedeutet eine deutliche konstruktive und apparative Vereinfachung im Vergleich zu dem Konzept mit mehreren Einspritzdüsen pro Zylinder. Auch resultiert eine erhebliche Kostenersparnis bei der Herstellung eines Dieselmotors mit einem solchen Zylinderdeckel, weil nur noch eine Einspritzdüse pro Zylinder vorgesehen werden muss.

Das zentrale bzw. im wesentlichen zentrale Einspritzen ist auch günstiger, weil es zu einer gleichmässigeren Temperaturverteilung im Brennraum führt. Dies hat den Vorteil, dass die thermischen Belastungen der einzelnen Komponenten, die durch lokale Erhitzungen verursacht werden können, geringer sind. Zudem resultiert aus der Anordnung der Einbauöffnung bzw. der Einspritzdüse in der der Kolbenstirnfläche gegenüberliegenden Deckenfläche ein möglichst grosser Abstand zwischen der Einspritzdüse und dem Kolben, sodass ein nachteiliges direktes Anspritzen der Kolbenstirnfläche weitestgehend vermieden wird.

Die Auslassöffnung für das Auslassventil ist vorzugsweise in der Seitenfläche des Zylinderdeckels vorgesehen, sodass das Auslassventil bezüglich der Längsachse des Zylinders geneigt angeordnet ist. Daraus ergibt sich der Vorteil einer geringeren Bauhöhe des Dieselmotors.

Ferner ist es vorteilhaft, wenn die Einbauöffnung derart angeordnet ist, dass sie im montierten Zustand des Zylinderdeckels exzentrisch bezüglich der Längsachse des Zylinders liegt. Dies bedeutet, dass das Zentrum der Einbauöffnung nicht auf der Längsachse des Zylinders bzw. deren Verlängerung liegt. Die Einspritzdüse kann dann so montiert werden, dass ihre Achse parallel versetzt zur Längsachse des Zylinders verläuft. Durch diese Massnahme lässt sich der Abstand zwischen Einspritzdüse und Auslassventil vergrössern, sodass ein direktes Anspritzen des Auslassventils vermieden wird.

Die erfindungsgemässe Anordnung für eine Zweitakt-Dieselbrennkraftmaschine mit Längsspülung, die mindestens einem Zylinder aufweist, in dem ein Kolben hin- und herbewegbar angeordnet ist, umfasst einen erfindungsgemässen Zylinderdeckel, eine Einspritzdüse und ein Auslassventil. Dabei ist das Auslassventil vorzugsweise so angeordnet, dass seine Längsachse schräg zur Längsachse des Zylinders verläuft, insbesondere unter einem Winkel von 15° bis 45°, speziell unter einem Winkel von etwa 30°. Diese Anordnung hat sich in der Praxis als besonders günstig erwiesen.

Für die zentrale bzw. im wesentlichen zentrale Einspritzung hat es sich als günstig erwiesen, wenn die Einspritzdüse mehrere Düsenlöcher zum Einbringen des Brennstoffs in den Brennraum aufweist, die auf mindestens zwei Kreislinien angeordnet sind. Durch diese Massnahme lässt sich eine besonders gleichmässige Verteilung des Brennstoffs im Brennraum erreichen. Vorzugsweise sind dabei die Düsenlöcher derart angeordnet, dass diejenigen Düsenlöcher, die auf einer der Kreislinien liegen, bezüglich der radialen Richtung jeweils zwischen zwei Düsenlöchern einer benachbarten Kreislinie liegen, das heisst, die zu unterschiedlichen Kreislinien gehörenden Düsenlöcher sind jeweils "auf Lücke" angeordnet.

Weitere vorteilhafte Massnahmen und bevorzugte Ausgestaltungen der Erfindungsgegenstände ergeben sich aus den abhängigen Ansprüchen.

Im folgenden wird die Erfindung anhand der Zeichnung und anhand von Ausführungsbeispielen näher erläutert. In der schematischen nicht massstäblichen Zeichnung zeigen:
- Fig. 1:: eine Darstellung von wesentlichen Teilen eines Zylinders eines Grossdieselmotors, mit einem Ausführungsbeispiel der erfindungsgemässen Anordnung, die einen erfindungsgemässen Zylinderdeckel umfasst,
- Fig. 2:: eine Aufsicht auf die Düsenlöcher eines ersten Ausführungsbeispiels einer Einspritzdüse,
- Fig. 3:: eine Aufsicht auf die Düsenlöcher eines zweiten Ausführungsbeispiels einer Einspritzdüse, und
- Fig. 4:: eine Skizze zur Verdeutlichung des Neigungswinkels ψ.

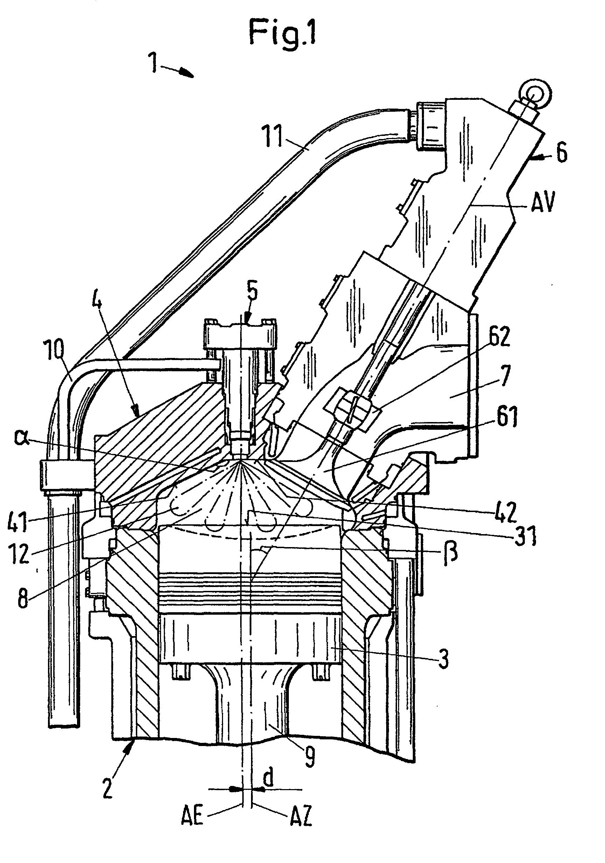

Der erfindungsgemässe Zylinderdeckel für eine Zweitakt-Dieselbrennkraftmaschine mit Längsspülung bzw. die erfindungsgemässe Anordnung mit einem solchen Zylinderdeckel ist insbesondere für Grossdieselmotoren geeignet wie sie beispielsweise im Schiffsbau verwendet werden. Fig. 1 zeigt, teilweise im Längsschnitt, die für das Verständnis der Erfindung wesentlichen Teile eines solchen Grossdieselmotors mit Längsspülung, der gesamthaft mit dem Bezugszeichen 1 bezeichnet ist. Auf die Darstellung anderer, an sich bekannter Komponenten solcher Motoren 1 wurde aus Gründen der besseren Übersicht verzichtet.

In Fig. 1 ist der obere Bereich eines der üblicherweise mehreren Zylinder 2 des Dieselmotors 1 zu sehen. In dem Zylinder 2 ist eine Kolben 3 entlang der Längsachse AZ des Zylinders 2 hin- und herbewegbar angeordnet. Der Kolben 3 ist mittels einer Kolbenstange 9 in an sich bekannter Weise mit einem nicht dargestellten Kreuzkopf verbunden, der andererseits über eine Schubstange (nicht dargestellt) mit einer Kurbelwelle (nicht dargestellt) verbunden ist.

Der Zylinder 2 wird an seiner darstellungsgemäss oberen Seite von einem Zylinderdeckel 4 abgeschlossen, der auf den Zylinder 2 montiert ist. In dem Zylinderdeckel 4 ist eine Einbauöffnung zur Aufnahme einer Einspritzdüse 5 sowie eine Auslassöffnung für ein Auslassventil 6 vorgesehen. Die Einspritzdüse 5 ist über eine Brennstoffleitung 10 mit einer nicht dargestellten Einspritzvorrichtung verbunden; die den Brennstoff durch die Einspritzdüse 5 in einen Brennraum 8 des Zylinders einbringt, wie dies die strichpunktierten Keulen in Fig. 1 andeuten. Das Auslassventil 6 ist auf dem Zylinderdeckel 4 montiert und weist einen als Teller ausgestalteten Ventilkörper 61 auf, der in seiner in Fig. 1 dargestellten Schliessstellung die Auslassöffnung im Zylinderdeckel 4 verschliesst. Im Auslassventil 6 kann in an sich bekannter Weise ein Flügelrad 62 zum Drehen des Ventilkörpers 61 um die Längsachse AV des Auslassventils 6 vorgesehen sein. Über eine Hydraulikleitung 11 kann das Auslassventil 6 betätigt werden. Ist der Ventilkörper 61 in seiner geöffneten Stellung, so können Verbrennungsgase oder Spülluft aus dem Brennraum 8 durch die Auslassöffnung austreten und gelangen in eine Abgasleitung 7, die zu einem Abgassystem führt, das beispielsweise einen Turbolader oder andere Mittel zur Abgasrückführung umfasst.

Der Zylinderdeckel 4 ist derart ausgestaltet, dass er an seiner dem Innern des Zylinders 2 zugewandten Seite eine Deckenfläche 42 aufweist, die im montierten Zustand im wesentlichen parallel zur Kolbenstimfläche 31 des Kolbens 3, das heisst senkrecht zur Längsachse AZ des Zylinders liegt. An die Deckenfläche 42 schliesst sich eine Seitenfläche 41 an, deren darstellungsgemäss oberer Teil, welcher in die Deckenfläche 42 einmündet, schräg zur Längsachse AZ des Zylinders 2 verläuft, sodass die Seitenfläche 41 stumpfwinklig in die Deckenfläche 42 einmündet. Der untere, näher am Kolben 3 liegende Teil der Seitenfläche 41 verläuft parallel zur Längsachse AZ des Zylinders 2. Befindet sich der Kolben 3 im Bereich seines oberen Totpunkts, so wie es Fig. 1 zeigt, wird der Brennraum 8 durch die Kolbenstirnfläche 31 des Kolbens 3, die ihr gegenüberliegende Deckenfläche 42 und die Seitenfläche 41 des Zylinderdeckels 4 begrenzt. Folglich hat der Brennraum 8 eine sich in Richtung auf die Einspritzdüse 5 konisch verjüngende Form.

Der Begriff "Seitenfläche" ist so zu verstehen, dass er auch Ausgestaltungen umfasst, bei denen die Seitenfläche mehrere Teilflächen umfasst, die in Umfangsrichtung gesehen jeweils gewinkelt aneinander angrenzen, sodass die Seitenfläche einer Polyederoberfläche oder ein Teil davon ist.

Erfindungsgemäss ist die Einbauöffnung für die Einspritzdüse 5 in der Deckenfläche des Zylinderdeckels 4 vorgesehen. Durch diese Massnahme wird eine zentrale oder im wesentlichen zentrale Einspritzung des Brennstoffs in den Brennraum 8 des Zylinders 2 ermöglicht. Somit ist für jeden Zylinder nur noch eine Einspritzdüse 5 vonnöten, was eine erhebliche konstruktive und apparative Vereinfachung bedeutet. Mit der Bezeichnung "im wesentlichen zentrale Einspritzung" ist gemeint, dass die Einspritzung von der der Kolbenstirnfläche 31 gegenüberliegenden Deckenfläche 42 des Zylinderdeckels 4 her erfolgt, aber die Längsachse AE des Einspritzventils 5 nicht mit der Längsachse AZ des Zylinders 2 fluchten muss. Die Einspritzdüse 5 kann aus dem Zentrum der Deckenfläche 42 heraus verschoben angeordnet sein.

Bei dem in Fig. 1 dargestellten Ausführungsbeispiel ist die Auslassöffnung für das Auslassventil 6 in dem schräg zur Längsachse AZ des Zylinders 2 verlaufenden Teil der Seitenfläche 41 des Zylinderdeckels 4 vorgesehen, sodass die Längsachse AV des Auslassventils 6 schräg zur Längsachse AZ des Zylinders verläuft.

Vorzugsweise ist die Einbauöffnung für die Einspritzdüse 5 derart angeordnet, dass sie exzentrisch bezüglich der Längsachse AZ des Zylinders 2 bzw. deren Verlängerung liegt. Wie dies Fig. 1 zeigt, ist es dadurch möglich, die Einspritzdüse 5 bezüglich der Längsachse AV des Zylinders 2 versetzt im Zylinderdeckel anzuordnen. Die Längsachse AE der Einspritzdüse 5 erstreckt sich in einem Abstand d parallel zur Längsachse AZ des Zylinders 2. Die Einspritzdüse 5 ist dabei derart ausserhalb des Zentrums der Deckenfläche 42 angeordnet, dass die Längsachse AZ des Zylinders 2 bzw. ihre Verlängerung zwischen der Längsachse AE der Einspritzdüse 5 und dem Auslassventil 6 verläuft. Durch diese Massnahme lässt sich der Abstand zwischen der Einspritzdüse 5 und dem Auslassventil 6 vergrössern, sodass eine direkte Beaufschlagung des Ventilkörpers 61 mit Brennstoff während des Einspritzvorgangs wirkungsvoll unterbinden lässt. Dies bringt eine thermische Entlastung des Auslassventils 6 mit sich

Da im allgemeinen bei gattungsgemässen Dieselmotoren die Einbauöffnung für die Einspritzdüse 5 deutlich kleiner ist als die Auslassöffnung für das Auslassventil 6, kann bei dem erfindungsgemässen Zylinderdeckel 4 die Deckenfläche 42 wesentlich kleiner ausgestaltet werden als bei bekannten Dieselmotoren mit Längsspülung, bei denen das Auslassventil zentral, das heisst der Kolbenstirnfläche gegenüberliegend, angeordnet ist. Folglich kann mit dem erfindungsgemässen Zylinderdeckel 4 der Brennraum 8 in Richtung der Längsachse AZ des Zylinders 2 höher ausgestaltet werden. Daraus resultiert der Vorteil, dass der Abstand zwischen der Einspritzdüse 5 und der Kolbenstirnfläche 31 grösser wird, sodass ein Anspritzen der Kolbenstirnfläche 31 beim Einspritzvorgang vermieden wird.

Soll das Volumen des Brennraums 8 - gemessen, wenn sich der Kolben 3 im oberen Totpunkt befindet - im wesentlichen gleich gross sein wie bei bekannten Dieselbrennraftmaschinen, so lässt sich dies erreichen, indem der schräg zur Längsachse AZ des Zylinders 2 verlaufende Teil der Seitenfläche 41 des Zylinderdeckels 4 weniger steil ausgebildet wird als bei konventionellen Zylinderdeckeln. Durch diese Massnahme ist es beispielsweise auch möglich, einen konventionellen Grossdieselmotor mit der erfindungsgemässen Anordnung nachzurüsten.

In der Praxis hat es sich bewährt, die Seitenfläche 41 so auszubilden, dass sie mit der Deckenfläche 42 des Zylinderdeckels 4 einen Winkel α von 135° bis 165° und insbesondere einen Winkel α von etwa 150° bildet. Ist das Auslassventil 6, wie in Fig. 1 gezeigt, in dem schräg verlaufenden Teil der Seitenfläche 41 vorgesehen, so verläuft seine Längsachse AV unter einem Winkel β von 15° bis 45°, insbesondere unter einem Winkel β von etwa 30°, geneigt zur Längsachse AZ des Zylinders 2. Dabei kann das Auslassventil 6 so angeordnet sein, dass seine Längsachse AV die Längsachse AZ des Zylinders schneidet.

Eine Zweitakt-Dieselbrennkraftmaschine mit Längsspülung, die mit einem erfindungsgemässen Zylinderdeckel 4 bzw. mit einer erfindungsgemässen Anordnung aus Zylinderdeckel 4, Einspritzdüse 5 und Auslassventil 6 versehen ist, wird aufgrund der zentralen Einspritzung vorzugsweise mit einer reduzierten oder ganz ohne Drallbewegung der Spülluft betrieben. Bei konventionellen Zweitakt-Maschinen mit Längsspülung rotiert die Spülluft, die durch Spülluftschlitze im unteren Bereich des Zylinders eintritt, im Zylinder um dessen Längsachse (Drall). In diese mit Drall behaftete Luft wird dann von der Seite des Zylinders der Brennstoff eingespritzt und durch die rotierende Luft im gesamten Brennraum verteilt. Da bei der erfindungsgemässen Anordung die Einspritzung zentral oder im wesentlichen zentral erfolgt, ist für eine gleichmässige Verteilung des Brennstoffs im Brennraum 8, wenn überhaupt, nur eine geringere Drallbewegung der Luft vonnöten.

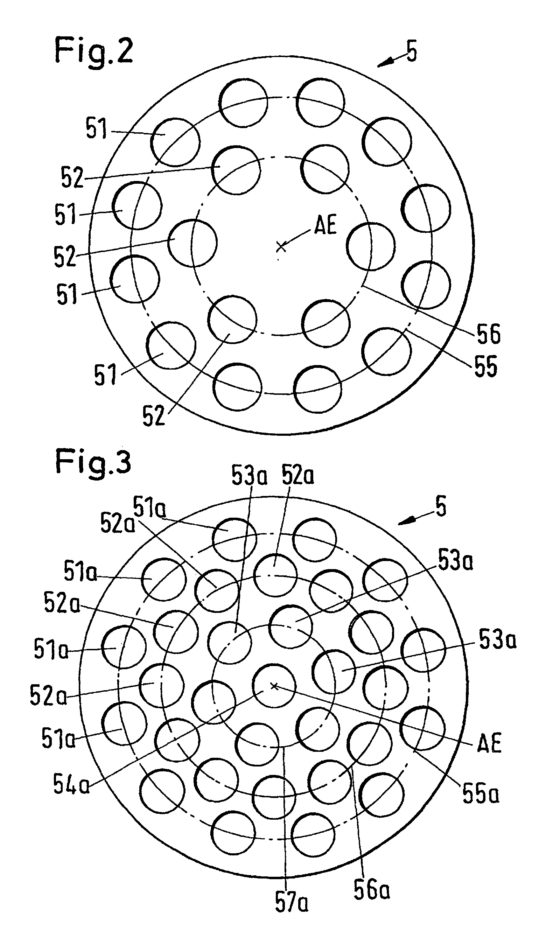

In den Fig. 2 und 3 sind zwei Ausführungsbeispiele von Einspritzdüsen 5 veranschaulicht, die insbesondere für die zentrale Einspritzung bei einer Zweitakt-Dieselbrennkraftmaschine geeignet sind, aber durchaus auch für andere Motorentypen Verwendung finden können. In beiden Ausführungbeispielen hat das distale Ende der Einspritzdüse 5, das im montierten Zustand in den Brennraum 8 des Zylinders 2 ragt, in axialer Richtung gesehen eine im wesentlichen konischen Form. Auf der Mantelfläche des Konus sind jeweils mehrere Düsenlöcher 51,52;51a,52a,53a angeordnet, durch welche der Brennstoff in den Brennraum 8 des Zylinders eingespritzt wird. Die Fig. 2 bzw. 3 zeigen eine Aufsicht auf das distale Ende des ersten bzw. des zweiten Ausführungsbeispiels der Einspritzdüse 5, um die Lage der Düsenlöcher zu veranschaulichen.

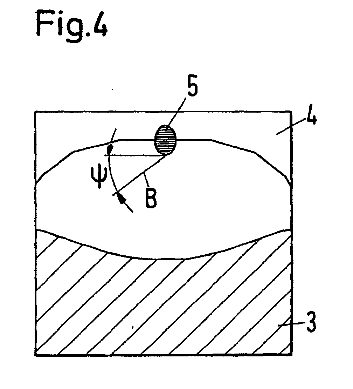

Das in Fig. 2 dargestellte erste Ausführungsbeispiel ist insbesondere für solche Dieselmotoren geeignet, die mit Drall der Spülluft betrieben werden. Die Einspritzung des Brennstoffs erfolgt dabei quer zur Richtung der Drallbewegung. Die Einspritzdüse 5 weist eine Vielzahl, beispielsweise achtzehn, Düsenlöcher 51,52 auf, die auf zwei Kreislinien 55, 56 angeordnet sind. Der Mittelpunkt jeder Kreislinie 55, 56 liegt jeweils auf der Längsachse AE der Einspritzdüse 5. Die beiden Kreislinien 55,56 befinden sich an verschiedenen axialen Positionen der Einspritzdüse 5. Die innere Kreislinie 56 liegt näher zum Kolben 3 als die äussere Kreislinie, das heisst gemäss der Darstellung in Fig. 1 liegt die innere Kreislinie 56 unterhalb der äusseren Kreislinie 55. Auf jeder Kreislinie 55 bzw. 56 sind jeweils mehrere Düsenlöcher 51 bzw. 52 vorzugsweise äquidistant angeordnet. Bei dem hier gezeigten Beispiel sind auf der inneren Kreislinie 56 sechs Düsenlöcher 52 und auf der äusseren Kreislinie 55 zwölf Düsenlöcher 51 vorgesehen. Jedes Düsenloch 51,52 hat beispielsweise einen Durchmesser von 0.75 mm. Die Düsenlöcher 51,52 sind bevorzugt derart angeordnet, dass diejenigen Düsenlöcher 51 oder 52 (genauer gesagt ihre jeweiligen Mittelpunkte), die auf einer der Kreislinien 55 oder 56 liegen, bezüglich der radialen Richtung jeweils zwischen zwei Düsenlöchern 52 oder 51 der benachbarten Kreislinie 56 oder 55 liegen, das heisst, die Düsenlöcher 52 der inneren Kreislinie 56 sind auf Lücke bezüglich der Düsenlöcher 51 der äusseren Kreislinie 55 angeordnet. Die Düsenlöcher 51,52 sind jeweils so ausgestaltet, dass die Hauptrichtung der aus ihnen austretenden Brennstoffstrahlen gegen die durch die Kreislinie 55 oder 56 festgelegte Ebene (die parallel zur Deckenfläche 42 des Zylinderdeckels 4 verläuft) um einen Neigungswinkel ψ geneigt ist. Die symbolische Skizze in Fig. 4 verdeutlicht wie dieser Neigungswinkel ψ festgelegt ist, wobei die mit dem Bezugszeichen B versehene Linie die Hauptrichtung eines Brennstoffstrahls andeutet. Der Neigungswinkel ψ ist vorzugsweise für die zu einer Kreislinie 55 oder 56 (Fig. 2) gehörenden Düsenlöcher 51 oder 52 gleich, aber für verschiedene Kreislinien 55,56 unterschiedlich. Für die innere Kreislinie 56 beträgt der Neigungswinkel ψ beispielsweise etwa 52.5° für die äussere Kreislinie 55 beispielsweise etwa 40°. Mit diesen bevorzugten Massnahmen lässt sich eine besonders gleichmässige Verteilung des Brennstoffs im Brennraum erzielen, was insbesondere im Hinblick auf einen möglichst hohen Wirkungsgrad der Brennkraftmaschine und eine gleichmässige Temperaturverteilung im Brennraum von Vorteil ist.

Es versteht sich, dass je nach Anwendung auch andere Anzahlen von Düsenlöchern 51,52 auf den Kreislinien 55,56 vorgesehen werden können oder eine andere Anzahl von Kreislinien 55,56.

Das in Fig. 3 dargestellte zweite Ausführungsbeispiel der Einspritzdüse 5 ist insbesondere für solche Dieselmotoren geeignet, die ohne oder fast ohne Drall der Spülluft betrieben werden. Die Einspritzdüse 5 weist eine Vielzahl, beispielsweise einunddreissig, Düsenlöcher 51a,52a,53a,54a auf. Im Unterschied zum ersten Ausführungsbeispiel ist beim zweiten Ausführungsbeispiel der Einspritzdüse 5 ein zentrales Düsenloch 54a am distalen Ende der Einspritzdüse 5 vorgesehen. Der Mittelpunkt dieses zentralen Düsenlochs 54a, das sich im montierten Zustand am nächsten zum Kolben 3 befindet, liegt auf der Längsachse AE der Einspritzdüse 5. Die anderen Düsenlöcher 51a,52a,53a, sind auf drei Kreislinien 55a, 56a, 57a angeordnet. Der Mittelpunkt jeder Kreislinie 55a, 56a, 57a liegt jeweils auf der Längsachse AE der Einspritzdüse 5. Die drei Kreislinien 55a, 56a, 57a befinden sich an verschiedenen axialen Positionen der Einspritzdüse 5. Auf jeder Kreislinie 55a, 56a, 57a sind jeweils mehrere Düsenlöcher 51a, 52a, 53a vorzugsweise äquidistant angeordnet. Bei dem hier gezeigten Beispiel sind auf der inneren Kreislinie 57a sechs Düsenlöcher 53a, auf der mittleren Kreislinie 56a zwölf Düsenlöcher 52a und auf der äusseren Kreislinie 55a ebenfalls zwölf Düsenlöcher 51a vorgesehen. Jedes Düsenloch 51a,52a,53a,54a hat beispielsweise einen Durchmesser von 0.575 mm. Die Düsenlöcher 51a,52a,53a sind bevorzugt derart angeordnet, dass diejenigen Düsenlöcher 51a, 52a, 53a (genauer gesagt ihre jeweiligen Mittelpunkte), die auf einer der Kreislinien 55a,56a,57a liegen, bezüglich der radialen Richtung jeweils zwischen zwei Düsenlöchern einer benachbarten Kreislinie liegen, das heisst, auch hier sind analog zum ersten Ausführungsbeispiel die Düsenlöcher einer Kreislinie auf Lücke bezüglich der Düsenlöcher einer benachbarten Kreislinie angeordnet. Die Düsenlöcher 51a,52a,53a,54a sind jeweils so ausgestaltet, dass die Hauptrichtung der aus ihnen austretenden Brennstoffstrahlen gegen die durch die Kreislinie 55a oder 56a oder 57a festgelegte Ebene (die parallel zur Deckenfläche 42 des Zylinderdeckels 4 verläuft) um den Neigungswinkel ψ, (Fig. 4) geneigt ist. Dieser Neigungswinkel ψ ist vorzugsweise für die zu einer Kreislinie 55a,56a,57a gehörenden Düsenlöcher 51a,52a,53a gleich, aber für verschiedene Kreislinien 55a,56a,57a unterschiedlich. Die Neigungswinkel ψ betragen beispielsweise: für das zentrale Düsenloch 54a etwa 90°, für die innere Kreislinie 57a etwa 70°, für die mittlere Kreislinie 56a etwa 52.5° und für die äussere Kreislinie 55a etwa 40°. Mit diesen bevorzugten Massnahmen lässt sich eine besonders gleichmässige Verteilung des Brennstoffs im Brennraum erzielen, was insbesondere im Hinblick auf einen möglichst hohen Wirkungsgrad der Brennkraftmaschine von Vorteil ist.

Es versteht sich, dass je nach Anwendung auch andere Anzahlen von Düsenlöchern 51a,52a,53a auf den Kreislinien 55a,56a,57a vorgesehen werden können oder eine andere Anzahl von Kreislinien 55a,56a,57a.

Durch den erfindungsgemässen Zylinderdeckel 4 bzw. die erfindungsgemässe Anordnung wird es ermöglicht, auch Zweitakt-Grossdieselmotoren mit Längsspülung mittels zentraler oder im wesentlichen zentraler Einspritzung des Brennstoffs in den Brennraum 8 zu betreiben. Dies hat insbesondere den Vorteil, dass pro Zylinder nur noch ein Einspritzventil 5 benötigt wird, ohne dass dafür Zugeständnisse an die Effizienz des Motors gemacht werden müssen. Durch das geneigt angeordnete Auslassventil 6 lässt sich zudem die totale Bauhöhe eines Grossdieselmotors reduzieren. Die Erfindung ist insbesondere auch für Zweitakt-Dieselbrennkraftmaschinen geeignet die einen langen Hub haben, das heisst bei denen das Verhältnis Hub zu Bohrung beispielsweise grösser oder gleich drei ist.

## Patentansprüche

1. Zylinderdeckel für eine Zweitakt-Dieselbrennkraftmaschine mit Längsspülung, insbesondere für einen Grossdieselmotor, die mindestens einem Zylinder (2) aufweist, in dem ein Kolben (3) hin- und herbewegbar angeordnet ist, welcher Zylinderdeckel eine Deckenfläche (42) und eine Seitenfläche (41) umfasst, die im montierten Zustand den Brennraum (8) des Zylinders (2) begrenzen, sowie nur eine Einbauöffnung zur Aufnahme einer Einspritzdüse (5), durch die der Brennstoff in den Brennraum (8) einbringbar ist, und eine Auslassöffnung für ein Auslassventil (6) zum Abführen der Verbrennungsgase aus dem Brennraum (8), **dadurch gekennzeichnet, dass** die Einbauöffnung in der Deckenfläche (42) vorgesehen ist.

2. Zylinderdeckel nach Anspruch 1, bei dem die Auslassöffnung in der Seitenfläche (41) vorgesehen ist.

3. Zylinderdeckel nach einem der vorangehenden Ansprüche, bei welchem die Seitenfläche (41) stumpfwinklig in die Deckenfläche (42) einmündet, insbesondere unter einem Winkel (α) von 135° bis 165°, speziell unter einem Winkel (α) von etwa 150°.

4. Zylinderdeckel nach einem der vorangehenden Ansprüche, wobei die Einbauöffnung derart angeordnet ist, dass sie im montierten Zustand des Zylinderdeckels (4) exzentrisch bezüglich der Längsachse (AZ) des Zylinders (2) liegt.

5. Anordnung für eine Zweitakt-Dieselbrennkraftmaschine mit Längsspülung, insbesondere für einen Grossdieselmotor, die mindestens einem Zylinder (2) aufweist, in dem ein Kolben (3) hin- und herbewegbar angeordnet ist, welche Anordnung einen Zylinderdeckel (4), eine Einspritzdüse (5) und ein Auslassventil (6) aufweist, **dadurch gekennzeichnet, dass** der Zylinderdeckel (4) nach einem der vorangehenden Ansprüche ausgestaltet ist.

6. Anordnung nach Anspruch 5, bei welcher das Auslassventil (6) so angeordnet ist, dass seine Längsachse (AV) schräg zur Längsachse (AZ) des Zylinders (2) verläuft, insbesondere unter einem Winkel (β) von 15° bis 45°, speziell unter einem Winkel (β) von etwa 30°.

7. Anordnung nach Anspruch 5 oder 6, bei welcher die Einspritzdüse (5) bezüglich der Längsachse (AZ) des Zylinders (2) versetzt im Zylinderdeckel (4) angeordnet ist.

8. Anordnung nach einem der Ansprüche 5-7, wobei die Einspritzdüse (5) mehrere Düsenlöcher (51,52;51a,52a,53a) zum Einbringen des Brennstoffs in den Brennraum (8) aufweist, die vorzugsweise auf mindestens zwei Kreislinien (55,56;55a,56a,57a) angeordnet sind.

9. Anordnung nach Anspruch 8, wobei die Düsenlöcher (51,52;51a,52a,53a) derart angeordnet sind, dass diejenigen Düsenlöcher (51,52;51a,52a,53a), die auf einer der Kreislinien (55,56;55a,56a,57a) liegen, bezüglich der radialen Richtung jeweils zwischen zwei Düsenlöchern (51,52;51a,52a,53a) einer benachbarten Kreislinie (55,56;55a,56a,57a) liegen.

10. Anordnung nach einem der Ansprüche 5-9, bei der die Einspritzdüse (5) ein zentrales Düsenloch (54a) aufweist.

11. Zweitakt-Dieselbrennkraftmaschine, insbesondere Grossdieselmotor, mit einem Zylinderdeckel gemäss einem der Ansprüche 1-4 oder mit einer Anordnung nach einem der Ansprüche 5-10.

## Claims

1. Cylinder cover for a two-stroke diesel combustion engine with longitudinal scavenging, in particular for a large diesel engine, which has at least one cylinder (2) in which a piston (3) is arranged so as to be movable back and forth, said cylinder cover comprising a ceiling surface (42) and a side surface (41) which bound the combustion chamber (8) of the cylinder (2) in the assembled state as well as just one installation opening for the reception of an injection nozzle (5) through which the fuel can be introduced into the combustion chamber (8) and an outlet opening for an outlet valve (6) for the conducting away of the combustion gases out of the combustion chamber (8), **characterised in that** the installation opening is provided in the ceiling surface (42).

2. Cylinder cover in accordance with claim 1 in which the outlet opening is provided in the side surface (41).

3. Cylinder cover in accordance with one of the preceding claims in which the side surface (41) opens at an obtuse angle into the ceiling surface (42), in particular at an angle (α) of 135° to 165°, especially at an angle (α) of approximately 150°.

4. Cylinder cover in accordance with one of the preceding claims, with the installation opening being arranged in such a manner that it is eccentrically disposed with respect to the longitudinal axis (AZ) of the cylinder (2) in the assembled state of the cylinder cover (4).

5. Arrangement for a two-stroke diesel combustion engine with longitudinal scavenging, in particular for a large diesel engine, which has at least one cylinder (2) in which a piston (3) is arranged so that it can be moved back and forth, said arrangement comprising a cylinder cover (4), an injection nozzle (5) and an outlet valve (6), **characterised in that** the cylinder cover (4) is designed in accordance with one of the preceding claims.

6. Arrangement in accordance with claim 5, in which the outlet valve (6) is arranged in such a manner that its longitudinal axis (AV) extends at an inclination with respect to the longitudinal axis (AZ) of the cylinder (2), in particular at an angle (β) of 15° to 45°, especially at an angle (β) of approximately 30°.

7. Arrangement in accordance with claim 5 or claim 6, in which the injection nozzle (5) is arranged in the cylinder cover (4) offset with respect to the longitudinal axis (AZ) of the cylinder (2).

8. Arrangement in accordance with one of the claims 5 to 7, with the injection nozzle (5) having a plurality of nozzle holes (51, 52; 51a, 52a, 53a) for the introduction of the fuel into the combustion chamber (8) which are preferably arranged on at least two circular lines (55, 56; 55a, 56a, 57a).

9. Arrangement in accordance with claim 8, with the nozzle holes (51, 52; 51a, 52a, 53a) being arranged in such a manner that those nozzle holes (51, 52; 51a, 52a, 53a) which lie on one of the circular lines (55, 56; 55a, 56a, 57a) lie in each case between two nozzle holes (51, 52; 51a, 52a, 53a) of an adjacent circular line (55, 56; 55a, 56a, 57a) with respect to the radial direction.

10. Arrangement in accordance with one of the claims 5 to 9 in which the injection nozzle (5) has a central nozzle hole (54a).

11. Two-stroke diesel combustion engine, in particular a large diesel engine, comprising a cylinder cover in accordance with one of the claims 1 to 4 or comprising an arrangement in accordance with one of the claims 5 to 10.

## Revendications

1. Couvercle de cylindre pour un moteur à combustion Diesel à deux temps avec balayage longitudinal, notamment pour un grand moteur Diesel qui présente au moins un vérin (2) dans lequel un piston (3) est déplaçable selon un mouvement de va-et-vient, ledit couvercle de cylindre comportant une face de recouvrement (42) et une face latérale (41) qui, à l'état monté, délimitent l'enceinte de combustion (8) du vérin (2), ainsi qu'une seule ouverture de montage pour la réception de l'injecteur (5) par lequel le combustible peut être introduit dans l'enceinte de combustion (8), et une ouverture d'évacuation pour une soupape d'échappement (6) pour évacuer les gaz de combustion de l'enceinte de combustion (8), **caractérisé en ce que** l'ouverture de montage est prévue dans la face de recouvrement (42).

2. Couvercle de cylindre selon la revendication 1, où l'ouverture d'échappement est prévue dans la face latérale (41).

3. Couvercle de cylindre selon l'une des revendications précédentes, où la face latérale (41) débouche selon un angle obtus dans la face de recouvrement (42), notamment sous un angle (α) de 135° à 165°, en particulier sous un angle (α) d'environ 150°.

4. Couvercle de cylindre selon l'une des revendications précédentes, où l'ouverture de montage est disposée de façon qu'à l'état monté du couvercle de cylindre (4), elle est excentrique relativement à l'axe longitudinal (AZ) du cylindre (2).

5. Agencement pour un moteur à combustion Diesel à deux temps à balayage longitudinal, notamment pour un grand moteur Diesel, qui présente au moins un vérin (2) dans lequel un piston (3) est disposé pour se déplacer selon un mouvement de va-et-vient, l'agencement précité présentant un couvercle de cylindre (4), un injecteur (5) et une soupape d'échappement (6), **caractérisé en ce que** le couvercle de cylindre (4) est réalisé selon l'une des revendications précédentes.

6. Agencement selon la revendication 5, où la soupape d'échappement (6) est disposée de façon que son axe longitudinal (AV) s'étende en biais à l'axe longitudinal (AZ) du cylindre (2), notamment sous un angle (β) de 15° à 45°, particulièrement sous un angle (β) d'environ 30°.

7. Agencement selon la revendication 5 ou 6, où l'injecteur (5) est disposé relativement à l'axe longitudinal (AZ) du cylindre (2) d'une manière décalée dans le couvercle de cylindre (4).

8. Agencement selon l'une des revendications 5 à 7, où l'injecteur (5) présente plusieurs trous de buse (51, 52 ; 51a, 52a, 53a) pour introduire le combustible dans l'enceinte de combustion (8), qui sont disposés de préférence sur au moins deux lignes circulaires (55, 56 ; 55a, 56a, 57a).

9. Agencement selon la revendication 8, où les trous de buse (51, 52 ; 51a, 52a, 53a) sont disposés de façon que les trous de buse (51, 52 ; 51a, 52a, 53a) qui se situent sur l'une des lignes circulaires (55, 56 ; 55a, 56a, 57a) se situent relativement à la direction radiale, respectivement entre deux trous de buse (51, 52 ; 51a, 52a, 53a) d'une ligne circulaire avoisinante (55, 56 ; 55a, 56a, 57a).

10. Agencement selon l'une des revendications 5 à 9, où l'injecteur (5) présente un trou de buse central (54a).

11. Moteur à combustion Diesel à deux temps, notamment grand moteur Diesel, avec un couvercle de cylindre selon l'une des revendications 1 à 4, ou avec un agencement selon l'une des revendications 5 à 10.
